# EUROPEAN PATENT APPLICATION

(11) **EP 0 619 948 A2**
(43) Date of publication of application: **19.10.1994**
(21) Application number: 94301555.2
(22) Date of filing: 04.03.1994
(51) Int. Cl.: A21D 13/08, A21D 13/00, A21D 2/26, A23L 1/164

(54) **Low density no fat baked product and method for making**

(30) Priority: 25.03.1993 US 36788
(71) Applicant: KRAFT FOODS, INC., White Plains New York 10625 (US)
(72) Inventor: Lugay, Joaquin Castro, Mahopac, New York 10541 (US); Schmidt, Walter Louis, Hopewell Junction, New York 12533 (US); Cochran, Stuart Allan, Tarrytown, New York 10591-3005 (US); Morimoto, Keisuke (NMN), Congers, New York 10920 (US)
(74) Representative: Eyles, Christopher Thomas

(57) **Abstract**

Low density, no fat baked products containing a heat setting film-forming protein is provided wherein the ready-to-eat breakfast cereal products have extended bowl lives. Also included is the method for making these unique products.

## Description

### Field Of The Invention

The present invention is directed to a low density baked product in the form of a loaf, cookie or a ready-to-eat cereal among other forms and to a method of producing these products. The invention is further directed to unique no fat baked products and to a ready-to-eat breakfast cereal having an extended bowl life.

### Background Of The Invention

Baked products, breakfast cereals and snacks are generally prepared by forming a dough from flour and water, shaping the dough and sometimes shaping the cooked dough into pieces by extruding, cutting or flaking. Generally, expanded or puffed cereals have little or no added fat and are not leavened. Puffed or expanded cereals generally have a low density and are very porous due to the cell structure formed by flashing off moisture at the extruder die or during the gun puffing stage. The porous characteristic of puffed cereals results in a cereal which readily absorbs liquids and quickly becomes soggy in milk. Flaked cereals, such as corn flakes, are generally of higher density than puffed cereals. These flaked cereals similarly tend to have a relatively short bowl life and become soggy within a few minutes after immersing in milk. The tendency of conventional cereal formulations to become soggy very quickly when immersed in milk has typically resulted in limited consumer appeal of the products and encouraged efforts to find suitable methods of extending the bowl life to ready-to-eat cereals.

Conventional cookie formulations become soggy very quickly when immersed in milk and tend to disintegrate completely. Generally, expanded or puffed cereals become soggy in milk in a few minutes but still retain some structural integrity such that the cereal pieces do not completely disintegrate. In contrast, cookie formulations absorb milk quickly and disintegrate.

Conventional cookie production generally involves preparing a farinaceous dough having a high fat or shortening content. The amount of water added to cookie doughs is usually only that amount needed to make the dough machinable by commercial machines. The high fat content and the leavening of the cookie dough may contribute to the crumb-like structure, texture and flavor of cookies. The high fat or shortening content of cookies is one characteristic which distinguishes cookies from crackers and expanded or puffed starch-based products.

Although the reasons are not completely understood, the high fat content of the cookie formulation tends to correlate to the short bowl life and short disintegration time of cookies when immersed in milk. The short bowl life of cookies may be due in part to the leavened crumb-structure of cookies which absorb milk faster than the expanded cellular structure of puffed cereals. It has generally been observed that as the fat content increases in the cookie formulation, the disintegration time of the baked cookie decreases. This characteristic has limited the successful use of cookie formulations in producing a ready-to-eat breakfast cereal which has an acceptable texture and bowl life in milk.

Efforts to improve the bowl life of breakfast cereals prepared from extruded and expanded cereal doughs and from baked cookie formulations have generally experienced only moderate success. In many instances the bowl life of expanded cereals is enhanced by providing a heavy sugar coating on the cereal pieces followed by a coating of a vegetable gum. Other methods to extend bowl life include providing a coating of fat or oil on the cereal. In addition to fats and oils, other hydrophobic components, such as waxy materials, have been used as coatings or additives in attempting to extend bowl life.

A method of extending the bowl life of cereals is disclosed in U.S. Patent No. 5,093,146 issued March 3, 1992. The disclosed method forms a cookie dough from ingredients including flour, sugar, fat or shortening and a bowl life extender of at least one film forming pregelatinized waxy starch or modified waxy starch, forms cereal pieces and bakes the pieces to form a substantially continuous film on the surfaces of the pieces. This inhibits or retards sogginess of the baked cereal pieces in milk. However, if the film is ruptured, the sogginess properties quickly return.

In the process of the present invention, low-density baked products in the form of a loaf, cookie or a ready-to-eat cereal are produced containing no fat and for the cereals provides a product which inhibits sogginess of the cereal pieces in milk even when the baked cereal is broken or ruptured.

### Summary Of The Invention

The present invention is directed to a baked product prepared from a batter comprising a unique edible heat setting, film forming protein, flour, sugar and at least one leavening agent to produce a baked low-density, no-fat edible product which can be formed in shapes such as a cookie, a loaf, or ready-to-eat bite-size cereals, having a leaven, crisp texture and low moisture content to be shelf-stable. Also included is a method of making the baked products of this invention. The unique feature of the product of this invention relates to the edible heat setting, film-forming protein which is distributed throughout the baked product. This film is produced by whipping into a film edible proteins such as egg white, lactalbumin, soy protein and the like so that on baking with other ingredients, a film is set throughout the baked product. For example, if the baked product were a standard cookie dough containing fat or shortening, especially in pieces for ready-to-eat cereals, on rupture or breaking of the surface, the product would not inhibit or retard sogginess of the baked size cereal pieces in milk. The baked product of this invention, containing no fat, when produced in bite-size ready-to-eat cereal will, even on rupture of the surface, inhibit or retard sogginess of the cereal pieces in milk. This permits larger shapes such as large cookies or loafs to be cut into smaller pieces and yet maintain the property of delayed milk sogginess in the smaller pieces.

### Detailed Description Of The Invention

The method of preparing a crisp low-density baked product of this invention is initiated by whipping an edible heat setting, film-forming protein into a stable continuous protein foam. This foam can be whipped from natural egg whites, or dried egg whites with sufficient added water to produce on whipping a stable continuous foam. Other edible proteins can be used, such as soy protein, lactalbumin and the like, to produce the protein foam structure. A preferred protein is a whippable egg white containing cream of tartar. The amounts of protein which can be used can range from about 30 to about 90 weight percent, preferably about 40 to about 60 weight percent of the starting ingredients.

Dry ingredients such as sugar, flour, at least one leavening agent and if desired salt, flavors, acidulants and the like are blended into the whipped protein foam structure to form a batter in contrast to a fat or shortening containing dough. By the term "batter" is meant a mixture of baking ingredients which has a slow flowable viscosity such as a pancake batter compared to a non-flowable dough viscosity. The resulting batter is shaped such as the form of a loaf, cookie or cereal size pieces and baked to form a low-density product (compared with a high cookie density) having a heat set protein film.

The flour component can be obtained from any cereal grain or mixture thereof. Exemplary of the flour components which can be used are wheat flour, corn flour, oat flour, barley flour, rye flour, rice flour and mixtures thereof. The flour component is generally used in the amount of about 5 to about 50 weight percent, preferably about 20 to about 40 weight percent of the starting ingredients.

In addition to the flour component, optional bulking agents may be included to provide added fiber, and/or reduce the caloric value of the finished product. The bulking agent may be used as a replacement for a portion of the flour. Bulking agents which may be used include, for example, polydextrose, hollocellulose, microcrystalline cellulose, and mixtures thereof. Generally, when a bulking agent is used, the bulking agent is blended with a flour in amounts of up to about 20% by weight based upon the weight of the batter. Corn bran, wheat bran, oat bran, rice bran, and mixtures thereof may be used to replace the flour in whole or in part to produce a fiber-enriched product, to enhance color, or to affect texture. The bran may be included, for example, in amounts of up to about 20% by weight, based upon the weight of the batter. Generally the bran component will be included in amounts of about 1% to about 10% by weight, and preferably from about 2% to about 5% by weight, based upon the weight of the batter.

The product of the present invention may also contain process-compatible ingredients to modify the texture of the products, such as sucrose, fructose, lactose, dextrose, galactose, maltodextrins, corn syrup solids, and mixtures thereof. Reducing sugars, such as fructose, maltose, lactose, and dextrose or mixtures of reducing sugars may be used to promote browning during the baking stage. The source of fructose may include invert syrup, corn syrup, high fructose corn syrup, molasses, brown sugar, maple syrup and mixtures thereof. The sugar may be admixed with other ingredients in either solid form or crystalline form.

Crystalline or granulated sucrose alone or with other sugars is preferred in the present invention. The sucrose content may, for example, be at least about 80% by weight, based upon the total sugar solids content of the dough. The balance of the sugar solids may comprise, for example fructose, dextrose, lactose, or mixtures thereof.

In embodiments of the present invention, the total sugar solids content of the formulation of the present invention is, for example, at least about 5% by weight, and may, for example go up to about 50% by weight, based upon the total weight of the formulation. The sugar solids content preferably ranges from about 20% by weight to about 30% by weight based upon the weight of the batter.

The formulation of the present invention may contain up to about 5% by weight of a leavening system, based on the total weight of the formulation. The amount of the leavening agent used is selected to control the rise of the product and to adjust the pH of the finished product. Exemplary chemical leavening agents include sodium bicarbonate, ammonium bicarbonate, and mixtures thereof and acidulants such as cream of tartar, sodium phosphates, calcium phosphates, tartaric acid and the like. Air can act as a leavening agent. Since the whippable proteins used in this invention produce a stable continuous protein foam, a sufficient amount of air may be present depending on the product to produce the desired leavening effect. In the preferred embodiments of the invention, the leavening agent is provided in amounts of about 0.5% to about 2% by weight on the weight of the batter.

The products of this invention may contain flavorings such as powdered cocoa, chocolate liquor, vanilla extracts, almond extract, fruit flavors, spices such as cinnamon and nutmeg and other flavoring agents. The amount of flavoring added is determined by the intensity of the flavoring agent and the desired intensity of the flavor. The added flavoring cannot have a fat content which could destroy the stable continuous protein foam in the batter. The amount of flavoring included in the batter formulation is less than 10% and preferably 0.5 to 5% by weight.

A further ingredient which can be used in the batter formulation of this invention is starch to promote a certain texture if desired. Unmodified starch is the starch of preference and corn starch is the preferred starch. The amount of starch which can be used in the formulation can range up to about 25%, preferably about 1 to about 10% by weight.

In the process of the present invention, the ingredients are selected to produce low-density, no fat baked product in the form of a loaf, cookie, ready-to-eat cereal pieces among other forms. The edible heat setting, whippable, stable protein foam can be made in any type of known mixer such as a Hobart mixer or Oakes Continuous Mixer and the like. After the foam has been prepared, the dry ingredients are blended into the protein foam and mixed for a period of time to provide an homogeneous batter. This batter can be shaped by known methods prior to the baking. The shaped batters are then baked in a suitable oven such as a zoned band or continuous oven among other baking units. The temperature in the ovens are set from about 230°F to about 550°F (about 110.0°C to about 287.8°C). The actual oven temperature will depend on the type of oven used and the batter ingredients' total baking time will depend on the shape of the batter to be baked and a large loaf will take a longer period of time compared to a bite-size cereal pieces. The baking step should be sufficient to completely bake and leaven the shaped batter and to promote the formation of a continuous edible heat setting film forming protein film throughout the product being baked, i.e., both the surface and inside the product. The product produced has a low-density (compared to the density of a normal fat or shortening containing cookie) with a cookie texture and has a protective film on the outside and inside of the product which if cereal, will retain its crispness in milk for an extended period of time, at least three minutes and as long as eight to ten minutes or longer.

The following examples are intended to be Exemplary of the invention and not intended to be limiting of the scope of the invention.

### Example 1

A low-density, ready-to-eat cereal was prepared having an extended bowl-life from the following ingredients:

| Ingredients | Grams/Batch |
|---|---|
| Egg White Solids | 25 |
| Water | 155 |
| Sugar | 60 |
| Salt | 4 |
| Cream of Tartar | 2 |
| Cake Flour | 75 |
| Corn Starch | 25 |
| Ammonium Bicarbonate | 2.5 |

The egg white solids and water were blended in a 5-quart (4.73 1) Hobart mixer and wire whipped for two minutes at a sufficient speed to form a stable foam mixture. A mixture of sugar, salt and cream of tartar were added to the egg white foam and the blend was mixed for an additional two minutes at the same speed as foam matrix. A mixture of cake flour, corn starch and ammonium bicarbonate were added to the blend and mixed until the batter is smooth. The batter is then deposited onto a lined sheet pan with a pastry bag with a #10 tip to produce a size of about 15 millimeters in diameter and 5 millimeters high. This shaped batter was baked in a Lincoln impingement oven at 350°F (176.7°C) for 8 minutes. A soft crisp texture baked cereal product, containing no fat, was produced having delayed moisture diffusion where the bowl life of the cereal pieces was greater than 50% crispness retained for 3 minutes in milk.

### Example 2

A low-density, ready-to-eat cereal was prepared having an extended bowl-life from the following ingredients:

| Part 1 | Grams |
|---|---|
| Natural Egg White | 1000.00 |
| Sugar | 312.00 |
| Salt | 8.30 |
| Cream Of Tartar | 4.20 |
| White Lemon Flavor Emulsion | 5.00 |
| Vanilla Extract | 25.00 |
| Natural and Artificial Flavor | 25.00 |

The ingredients of Part 1 above were whipped for 12 minutes in a 20-quart (18.92 l) Hobart mixer at sufficient speed to form a stable foam.

| Part 2 | Grams |
|---|---|
| Cake Flour | 560.00 |
| Corn Starch | 33.20 |
| Ammonium Bicarbonate | 15.50 |

Part 2 ingredients were slowly added to the Part 1 foamed product while whipping the mixture until thoroughly blended to form an homogeneous batter. The combination of Part 1 and Part 2 batter was deposited on a line sheet pan using a Polin depositor with 6 mm nozzles such that each unit weighs approximately 0.66 gram. The shaped batter was baked in a rack oven at 325°F (162.8°C) for 13 minutes. The baked product was 0.5 to 0.75 inch (12.7 to 19.1 mm) in diameter and about 0.25 inch (about 6.35 mm) high with a water activity of 0.43 to 0.47, a weight such that three units weighed about one gram. The baked units were soft crisp textured baked cereal product containing no fat having delayed moisture diffusion where the bowl life of the cereal pieces was greater than 50% crispness retained for 3 minutes in milk.

### Examples 3-5

In a similar process as used in Example 2, the following ingredients were used:

| Examples | 3 | 4 | 5 |
|---|---|---|---|
| Part 1 | Grams | Grams | Grams |
| Egg White | 1000.00 | - | - |
| Dried Egg White | - | 35.00 | 35.00 |
| Sugar | 500.00 | 50.00 | 75.00 |
| Fructose | - | 25.00 | - |
| Salt | 7.50 | 1.13 | 1.13 |
| Cream of Tartar | 10.00 | 1.00 | 1.00 |
| Vanilla Extract | - | 3.00 | 3.00 |
| Natural & Artificial Flavor Water | - | 215.00 | 215.00 |

| Part 2 | | | |
|---|---|---|---|
| Cake Flour | 900.00 | 135.00 | 135.00 |
| Corn Starch | 31.25 | 4.75 | 4.75 |
| Ammonium Bicarbonate | 25.00 | 3.75 | 3.75 |
| | | | |

Similar products in Example 2 were obtained being soft crisp textured baked cereal containing no fat, having a delayed moisture diffusion where the bowl life of the cereal pieces was greater than 50% crispness retained for 3 minutes in milk.

### Example6

A standard cookie formulation containing vegetable oil was prepared for comparing this product with the products of Examples 1 through 5 using the following ingredients and procedures:

| Solution "A" | Grams |
|---|---|
| Ammonium Bicarbonate | 5.00 |
| Bicarbonate of Soda | 3.50 |
| Water | 40.00 |

| Part 1 | Grams |
|---|---|
| Sucrose | 220.00 |
| Dextrose | 50.00 |
| Whole Egg | 40.00 |
| Salt | 2.50 |
| Water | 125.00 |
| Solution "A" | 48.50 |
| | |

Part 1 ingredients were mixed in a 5-quart (4.73 l) Hobart mixer with a paddle for four minutes at speed 2.

| Part 2 | Grams |
|---|---|
| Cookie Flour | 315.00 |
| Cake Flour | 150.00 |
| Lecithin | 0.50 |
| Leavening Acid | 2.50 |
| Vegetable Oil | 27.00 |

Part 2 ingredients are added to Part 1 ingredients and mixed for 3 minutes to provide an homogeneous mixture. The resulting dough was deposited on a line sheet pan using a Polin depositor with 6 mm nozzles in sizes equivalent to the cereal pieces of Examples 3 through 5. The dough was baked at 275°F (135.0°C) for 13 minutes. The baked product tends to be too dense (approximately twice as dense as the products of Examples 3-5) because these wafer formulations have a hard texture, a sand-like structure and there is weak cohesion within the wafer. The fat or vegetable oil prevents a continuous phase such as a film of the product to form. The fissures between the sand-like particles allows milk to penetrate readily into the cookie mass turning the product soggy within one minute.

## Claims

1. A baked product prepared from a batter comprising an edible heat setting, film forming protein, flour, sugar and at least one leavening agent wherein said batter is shaped and baked to form a low density no fat containing edible product.

2. A product according to claim 1, wherein said edible heat setting, film-forming protein is a whippable protein selected from egg white, lactalbumin and soy protein.

3. A product according to claim 1 or claim 2, wherein said film-forming protein is egg white and the baked product is in the form of a cookie.

4. A product according to claim 1 to claim 2, wherein the baked product is a low density no fat cereal.

5. A product according to any one of claims 1 to 4, wherein said film-forming protein is whippable egg white containing cream of tartar.

6. A product according to any one of claims 1 to 5, wherein said leavening agent is selected from air, ammonium bicarbonate, and sodium bicarbonate or mixtures of said bicarbonates and mixtures of said bicarbonates and acidulants.

7. A product according to any one of claims 1 to 6, wherein the batter contains an unmodified starch.

8. A method of preparing a crisp low density baked product comprising
(a) whipping an edible heat setting, film-forming protein into a stable continuous protein foam;
(b blending sugar, flour and at least one leavening agent into said protein film foam to form a batter;
(c) forming said batter into shaped pieces; and
(d) baking said shaped pieces to form a low-density baked product having a heat set protein film.

9. A method according to claim 8, wherein the batter is formed into cereal size pieces, and said cereal size pieces are baked to form a crisp low-density ready-to-eat no fat containing cereal having a crisp protein film to inhibit sogginess of said baked size cereal pieces in milk.

10. A method according to claim 9 or claim 10, wherein the edible heat setting, film forming protein is selected from egg white, lactalbumin and soy protein.

11. A method according to any one of claims 8 to 10, wherein said leavening agent is selected from air, ammonium bicarbonates, and sodium bicarbonate and mixtures of said bicarbonates and mixtures of said bicarbonates and acidulants.

12. A method according to any one of claims 8 to 11, wherein the batter contains an unmodified starch.
